# EUROPÄISCHE PATENTSCHRIFT

(11) **EP 1 311 554 B1**
(45) Veröffentlichungstag und Bekanntmachung des Hinweises auf die Patenterteilung: **03.11.2004**
(21) Anmeldenummer: 01962920.3
(22) Anmeldetag: 08.08.2001
(51) Int. Cl.: C08F 2/50, C08F 2/38, C08F 20/12

(54) **VERFAHREN ZUR HERSTELLUNG HAFTKLEBRIGER POLYACRYLATE UNTER VERWENDUNG MERCAPTOFUNKTIONALISIERTER PHOTOINITIATOREN**
METHOD FOR PRODUCING ADHESIVE POLYACRYLATES USING MERCAPTO FUNCTIONAL PHOTOINITIATORS
PROCEDE DE FABRICATION DE POLYACRYLATES ADHESIFS AU MOYEN DE PHOTOINITIATEURS A FONCTIONNALISATION MERCAPTO

(30) Priorität: 11.08.2000 DE 10039212
(43) Veröffentlichungstag der Anmeldung: 21.05.2003
(73) Patentinhaber: tesa AG, 20253 Hamburg (DE)
(72) Erfinder: HUSEMANN, Marc, 22605 Hamburg (DE); ZÖLLNER, Stephan, 22043 Hamburg (DE)
(86) Internationale Anmeldenummer: PCT/EP2001/009151
(87) Internationale Veröffentlichungsnummer: WO 2002/014378

(56) Entgegenhaltungen:
- WO-A-97/34935
- WO-A-99/62961
- US-A- 4 181 752

## Beschreibung

Die Erfindung betrifft ein Verfahren zur Herstellung haftklebriger Polyacrylate durch radikalische Polymerisation.

Haftklebemassen werden im steigenden Maße zur Herstellung von Haftklebebändem, selbstklebenden Etiketten, Haftschutzfolien oder anderen selbstklebenden Produkten herangezogen. Die hierfür eingesetzten Haftklebemassen müssen bestimmte Eigenschaften aufweisen, wie beispielsweise gute Oberflächenklebrigkeit, hohe Kohäsion, gute Klebrigkeit bei niedrigen und hohen Temperaturen und gute thermische Belastbarkeit.

In der DE 24 11 169 A1 sind mit UV-Strahlen vemetzbare Haftklebemassen beschrieben, bei denen man Copolymerisate aus (Meth)acrylsäureestem und monoolefinisch ungesättigten Ethern und (Meth)acrylsäureester-Derivaten von substituiertem Benzophenon als eincopolymerisierte Photoinitiatoren einsetzt. Die polymerisationsfähigen Benzophenone sind jedoch gegenüber UV-Strahlen wenig reaktiv und die aus den Polymerisaten hergestellten Haftklebstoffe weisen nach der UV-Vernetzung eine zu geringe Scherfestigkeit auf.

In der US 4,144,157 sind UV-vemetzbare Haftklebemassen beschrieben, die beispielsweise aus Acrylsäureestem und aus (Meth)acrylsäure-2-alkoxy-2-phenyl-2-benzoylethylester synthetisiert wurden. Wiederum nachteilig ist die geringe Reaktivität dieser Photoinitiatoren und die damit verbundene geringe Kohäsion der hergestellten Haftklebemassen.

Aus der US 4,737,559 sind mit UV-Strahlen vemetzbare Acrylathaftklebemassen bekannt, die in die Polymerkette eincopolymerisierbare (Meth)acryloylbenzophenon-Derivate enthalten. Diese Haftklebestoffe sind speziell für den Einsatz auf dem medizinischen Sektor, wie beispielsweise für Pflaster, konzipiert worden. Die gemäß jener Patentanmeldung hergestellten Haftklebemassen benötigen eine relativ lange Bestrahlungszeit, wodurch Klebkraft und Tack negativ beeinflußt werden.

in der DE 38 44 445 A1 werden UV-vemetzbare Haftklebemassen auf Basis von (Meth)acrylesterpolymerisaten beschrieben, die ein UV-reaktives, eincopolymerisiertes Monomer in Form eines N-substituierten (Meth)acrylamidbenzophenon-Derivates, eines (Meth)acryloyloxybenzophenon-Derivates oder eines Styrolbenzophenon-Derivates enthalten.

UV-vernetzbare Haftklebemassen auf Basis von Isoamyl(meth)acrylat-copolymerisaten beschreibt die DE 38 36 968 A1. Diese Haftklebemassen basieren auf α-,β-monoolefinisch ungesättigten Säuren, deren Homopolymerisate eine Glasübergangstemperatur von unter -30°C besitzen, auf monoolefinisch ungesättigten Säuren und/oder deren Anhydrid, auf weiteren olefinisch ungesättigten, funktionelle Gruppen enthaltende Monomeren und auf einem polymerisationsfähigen (Meth)acryloyloxybenzophenon- oder Acetophenon-Derivat. Die so hergestellten Haftklebemassen zeigen nach kurzer UV-Bestrahlung zwar eine akzeptable Kohäsion bei Raumtemperatur, jedoch ist die thermische Belastbarkeit unzureichend.

Die thermische Belastbarkeit wurde in der DE 195 01 024 A1 durch den Einsatz eines copolymerisierbaren Photoinitiators auf Basis eines Diesters der Kohlensäure gelöst.

Alle oben aufgeführten und beschriebenen Methoden weisen aber einen wesentlichen Nachteil auf. Die copolymerisierten Photoinitiatoren erfüllen nur die Funktion der UV-Vernetzung nach der Beschichtung. So müssen z.B. zur Herstellung von Acrylathaftklebemassen in Aceton Regler hinzugeführt werden, so daß die Polymerisation mit nur geringem Lösemittelanteil durchgeführt werden kann und eine Vergelung des Polymers vermieden wird. Die Verringerung des Lösemittelanteils ist besonders für Haftschmelzkleber auf Polyacrylatbasis von großem Interesse, da hier nach der Polymerisation das Lösemittel aufwendig entfernt werden muß und man daher die eingesetzten Mengen aus ökonomischen und ökologischen Gründen minimieren möchte.

In der US 5,942,555 sind Regler, die ebenfalls einen Photoinitiator beinhalten, zur Herstellung von telechelen Polymeren eingesetzt worden und anschließend mit UV-Licht aktiviert worden.

Schwefelverbindungen in Haftklebemassen sind aus dem Bereich der Kautschukklebemassen bekannt. Hier dienen sie als Stabilisatoren; siehe hierzu die DE 198 26 103 A1, welche die Verwendung von festen, in Kautschuk löslichen oder dispergierbaren Monothiolen als Stabilisatoren in geschmolzenen Haftklebemassen auf der Basis von Naturkautschuk oder Synthesekautschuken, geeigneten Klebharzen und Promotoren zur Erhöhung der Strahlenvemetzungsausbeute beschreibt. Mehrfunktionelle (Meth)acrylate können hier als Vernetzungspromotoren zugesetzt sein.

Aufgabe der vorliegenden Erfindung ist es, ein Verfahren zur Herstellung UV-strahlenvernetzbarer Acrytathaftktebemassen, insbesondere UV-strahlenvernetzbarer Acrylathaftschmelzklebemassen, zur Verfügung zu stellen, wobei die derart hergestellten Acrylathaftklebemassen die erwähnten Nachteile des Standes der Technik nicht mehr aufweisen.

Gelöst wird diese Aufgabe durch ein Verfahren, wie es im Hauptanspruch dargestellt ist. Die Unteransprüche betreffen vorteilhafte Weiterentwicklungen und Ausführungen dieses Verfahrens sowie die Verwendung der derart hergestellten Klebemassen zur Herstellung von Haftklebstoffartikeln.

Anspruch 1 betrifft dementsprechend ein Verfahren zur Herstellung haftklebriger Polyacrylate durch radikalische Polymerisation, bei welchem der Monomermischung oder der Reaktionsmischung mercaptofunktionalisierte Photoinitiatoren der allgemeinen Formel (I) und/oder (II)

**H―S―R (I)**

**R―S―S―R' (II)**

zugesetzt werden, wobei R und R' unabhängig voneinander gewählt sind aus den folgenden Gruppen:
a) Benzophenon-, Acetophenon-, Benzil-, Benzoin-, Hydroxyalkylphenon-, Phenylcyclohexylketon-, Anthrachinon-, Thioxanthon-, Triazin-, oder Fluorenonreste, wobei jeder dieser Reste mit einem oder mehreren Halogenatomen und/oder einer oder mehreren Alkoxygruppen und/oder einer oder mehreren Aminogruppen oder Hydroxygruppen substituiert sein kann,
b) Reste, welche einen oder mehrere der unter a) genannten substituierten oder unsubstituierten Reste beinhalten.

In einer ersten vorteilhaften Weiterentwicklung dieses Verfahrens beträgt der Anteil der Verbindungen (1) und/oder (II) 0,01 bis 5 Gew.-%, bezogen auf die eingesetzten Monomere.

In einer weiteren im erfinderischen Sinne sehr günstigen Ausführungsform des Verfahrens wird für die Polymerisation eine Monomermischung eingesetzt wird, welche zumindest die folgende Komponente enthält:
a) Acryl- und Methacrylsäure-Monomere der folgenden Struktur 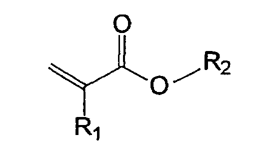 mit R₁ = H oder CH₃
   und R₂ = eine Alkylkette mit 2 - 20 C-Atomen
   mit einem Anteil von 65 bis 100 Gew.-%,
   sowie welche optional die folgende Komponente enthält:
b) Vinylverbindungen mit funktionellen Gruppen
   mit einem Anteil von 0 bis 35 Gew.-%,
wobei optional weitere Komponenten in der Monomermischung vorhanden sein können.

Beispiele für Monomere der Gruppe a) sind Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure. Als Beispiele für die Gruppe b) seien genannt Maleinsäureanhydrid, Styrol, Styrol-Verbindungen, Vinylacetat, (Meth)acrylamide, N-substituierte (Meth)acrylamide, β-Acryloyloxypropionsäure, Vinylessigsäure, Fumarsäure, Crotonsäure, Aconitsäure, Dimethylacrylsäure, Trichloracrylsäure, Itaconsäure, Vinylacetat, Hydroxyatkyl(meth)acrylat, aminogruppenhaltige (Meth)acrylate, hydroxygruppenhaltige (Meth)acrylate, besondersbevorzugt 2-Hydroxyethyl(meth)acrylat, 2-Hydroxypropyl-(meth)acrylat, und/oder 4-Hydroxybutyl(meth)acrylat und mit Doppelbindung funktionalisierte Photoinitiatoren.

Die Zusammensetzung der entsprechenden Monomere wird bevorzugt so gewählt, daß die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen.
Die freie radikalische Polymerisation kann in Gegenwart eines oder mehrerer organischer Lösungsmittel und/oder in Gegenwart von Wasser oder in Substanz durchgeführt werden. Bevorzugt wird so wenig Lösungsmittel wie möglich eingesetzt. Die Polymerisationszeit beträgt - je nach Umsatz und Temperatur - zwischen 6 und 48 h.
Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wäßrigen Medien bzw. Gemischen aus organischen und wäßrigen Lösungsmitteln werden zur Polymerisation bevorzugt dem Fachmann zu diesem Zwecke geläufige Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden.

Bei der Polymerisation können auch neben den mit einem UV-Photoinitiator modifizierten Thioverbindungen weitere Regler zur Molekulargewichtssenkung und Verringerung der Polydispersität eingesetzt werden. Als sogenannte Polymerisationsregler können z.B. Alkohole und Ether verwendet werden.

Die Polymerisation kann in Polymerisationsreaktoren durchgeführt werden, die im allgemeinen mit einem Rührer, mehreren Zulaufgefäßen, Rückflußkühler, Heizung und Kühlung versehen sind und für das Arbeiten unter N₂-Atmosphäre und Überdruck ausgerüstet sind.

Nach der Polymerisation in Lösemittel kann das Polymerisationsmedium unter vermindertem Druck entfernt werden, wobei dieser Vorgang bei erhöhten Temperaturen beispielsweise und vorteilhaft im Bereich von 80 bis 150°C durchgeführt wird. Die Polymere können dann in lösemittelfreiem Zustand, insbesondere als Schmelzhaftkleber, eingesetzt werden. Je nach Weiterverarbeitung und Anwendungsgebiet ist es gegebenenfalls auch von Vorteil, die erfindungsgemäßen Polymere in Substanz herzustellen.

Zur Herstellung der Acrylathaftklebemassen können die erfindungsgemäßen Polymere in üblicher Weise modifiziert werden. Beispielsweise werden in günstiger Weise klebrigmachende Harze, wie Terpen-, Terpenphenol-, C5-, C9-, C5/C9- Kohlenwasserstoff-, Pinen-, Inden- oder Kolophoniumharze auch in Kombination miteinander zugesetzt. Weiterhin ist es je nach Anwendung von Vorteil, Weichmacher, verschiedene Füllstoffe (z.B. Kreide, Russ, Mikroglaskugeln etc.) und Alterungsschutzmittel als Zusätze beizumischen. Weiterhin werden optional Vernetzer und dem Fachmann bekannte Promotoren zur UV-Vernetzung beigemischt. Multifunktionelle Acrylate als Vemetzer sind besonders vorteilhaft zur Herstellung von Stempolymeren.

Die Polymere werden vorteilhaft in üblicher Weise durch Streichen, Spritzen, Walzen, Rakeln, Gießen oder Extrudieren, gegebenenfalls bei erhöhter Temperatur - meist im Temperaturbereich von 20 bis 150 °C - auf zu diesem Zwecke als Trägermaterialien geeignete Substrate aufgebracht, beispielsweise auf Papier, Pappe, Holz, Metalle und Kunststofffolien, z.B. aus weichgemachten PVC, Polyethylen, Polyamiden, Polyethylenglykolterephthalat oder Polypropylen. Soweit dabei Lösemittel verwendet werden, können diese von den Überzügen leicht, gegebenenfalls bei Raumtemperatur oder wenig erhöhten Temperaturen, im allgemeinen bei Temperaturen von 20 - 150 °C, vorzugsweise von 50 - 100 °C, abgedampft werden, wobei in üblicher Weise Heizstrahler oder Warmluftwälzvorrichtungen eingesetzt werden.

In weiterhin sehr vorteilhafter Weise für das erfinderische Verfahren werden die haftklebrigen Polyacrylate durch ultraviolette Strahlung in einem Wellenlängenbereich von 200 bis 400 nm vemetzt. Die Vernetzung der erfindungsgemäßen Schmelzhaftklebemassen erfolgt in günstiger Weise durch kurzzeitige UV-Bestrahlung mit handelsüblichen Quecksilber-Hochdruck oder Mitteldrucklampen mit einer Leistung von z.B. 80 bis 160 W/cm. Es kann angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Die Erfindung betrifft zudem die Verwendung der haftklebrigen Polyacrylate, welche durch das erfinderische Verfahren hergestellt wurden, zur Herstellung von Haftklebstoffartikeln, insbesondere zur Herstellung eines Klebebandes mit einer ein- oder beidseitig auf einem Träger aufgetragenen Acrylathaftklebemasse.

Die durch das erfinderische Verfahren hergestellten UV-härtenden Polyacrylate eignen sich insbesondere als Schmelzen oder als Lösungen zur Herstellung von Haftklebematerialien mit verbessertem Tack, verbesserter Klebkraft und hoher Kohäsion wie Haftklebebänder, Haftklebefolien oder Haftklebeetiketten.

Die Haftklebeeigenschaften der durch das erfinderische Verfahren hergestellten Polyacrylate nach der UV-Bestrahlung werden mit den im folgenden beschriebenen Testmethoden ermittelt.

Für die Prüfung werden Folien aus Polyethylenglykolterephthalat mit einem Masseauftrag von 50 g/m² beschichtet.

Sofern für die klebtechnische Ausprüfung gelöste Polymerisate eingesetzt werden, werden die Lösemittel 10 Minuten bei 120 °C im Trockenschrank abgedampft. Die getrockneten Haftklebeschichten wurden mit einer Eltosch-Anlage mit Quecksilber-Mitteldrucklampen bestrahlt. Der Abstand der UV-Lampen zu den bestrahlten Haftklebeschichten betrug 5 cm, die Leistung der UV-Lampen liegt bei 120 W/cm.

Die Erfindung wird nachfolgend durch Beispiele erläutert. Mengenangaben, Anteile und Prozentanteile sind auf die Gesamtmenge der Monomeren bezogen.

### Herstellung der UV-aktivierbaren Thioregler

Übersicht der hergestellten Thio-funktionalisierten Photoinitiatoren (s. Tabelle 1)

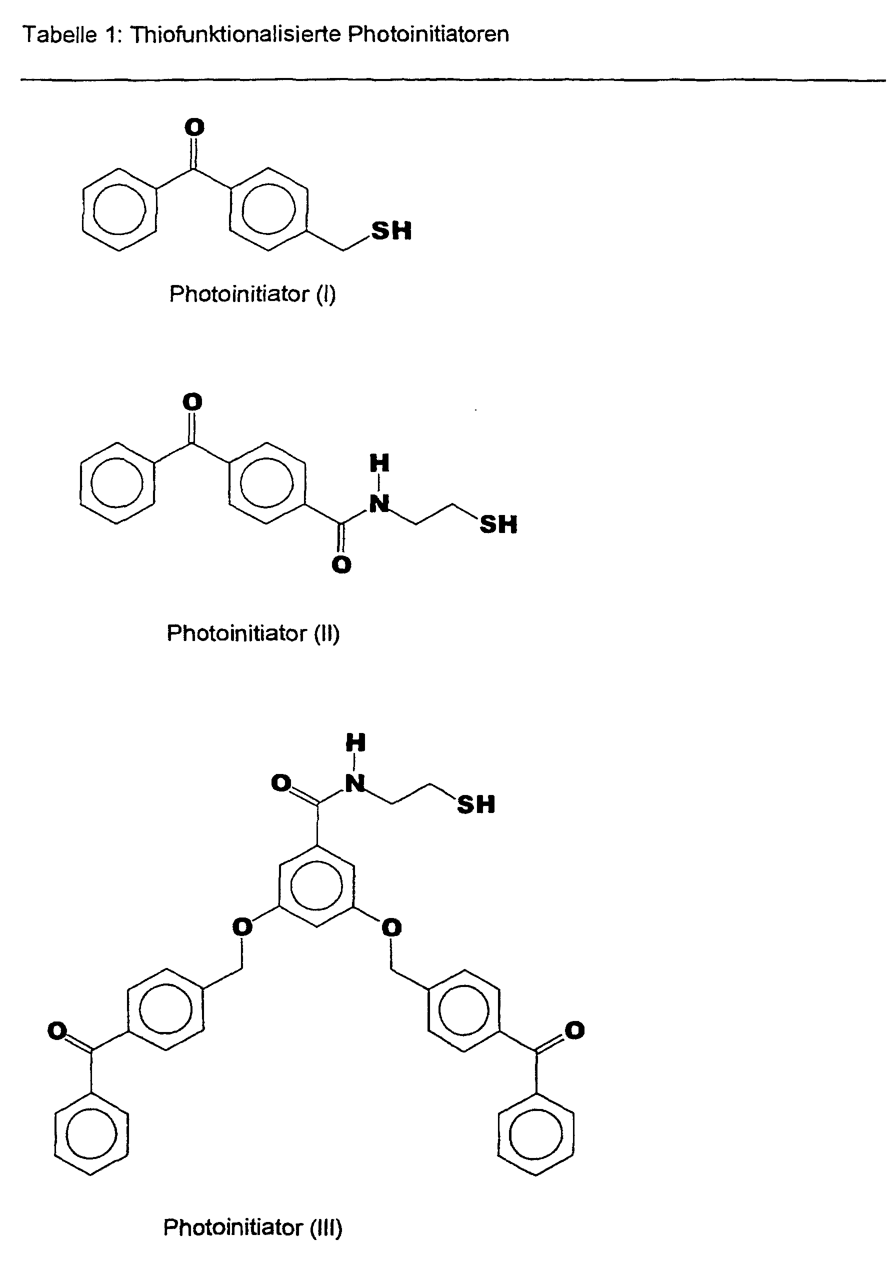

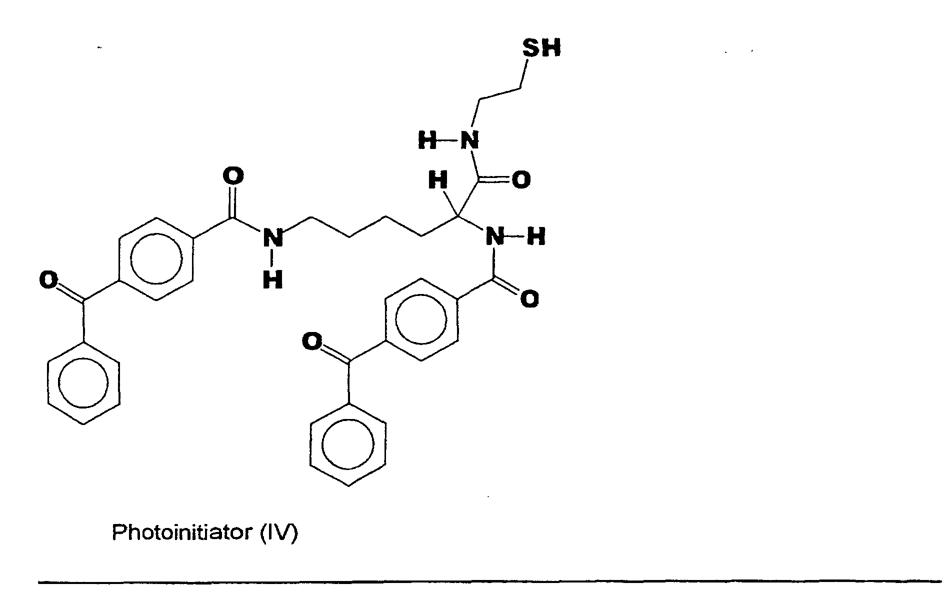

### Beispiel 1

### Herstellung von 4-Benzoylbenzoylchlorid

1,0 kg (4,2 mol) 4-Benzoylbenzoesäure wurden in einen 5 L Reaktor, ausgestattet mit einem Rückflußkühler und einem Rührer, gefüllt und zusätzlich 645 ml (8,84 mol) Thionylchlarid und 725 ml Toluol hinzugegeben. Anschließend wurden 3,5 ml DMF hinzugegeben und die Mischung für 4 h unter Rückfluß gekocht. Nach dem Abkühlen wurde das Lösemittel unter reduziertem Druck entfernt, und überschüssiges Thionylchlorid wurde durch dreimaliges Evaporieren mit jeweils 500 ml Toluol entfernt Das Produkt wurde in einem Gemisch aus Toluol/Hexan 1:4 umkristallisiert und mit 934 g (86 % Ausbeute) nach dem Trocknen im Vakuumofen gewonnen.
Das ¹H-NMR ergab bei 300 MHz (CDCl₃): 7,18 - 8,26 ppm (m, 9 H). Die Signale waren konsistent mit dem gewünschten Produkt. Alle chemischen Verschiebungen sind gegen Tetramethylsilan als interner Standard angegeben.

### Beispiel 2

### Herstellung von 4-Brommethylbenzophenon

750 g (3,82 mol) 4-Methylbenzophenon wurden in einen 5 L Reaktor, ausgestattet mit einem Rückflußkühler und einem Rührer, gefüllt und zusätzlich 2850 ml Benzol hinzugegeben. Die Mischung wurde bis zum Rückfluß erhitzt und tropfenweise 610 g (3,82 mol) Brom in 330 ml Benzol gelöst hinzugegeben. Die Zugabegeschwindigkeit betrug etwa 1,5 ml/min. Der Reaktor wurde mit einer Halogenlampe mit 100 W zur Initiierung der Reaktion, nachfolgend mit verschiedenen Zyklen identischer Leistung bestrahlt.
In den Zyklen wurde jeweils abwechselnd über eine Dauer von 5 s bestrahlt und anschließend über eine Dauer von 40 s nicht bestrahlt. Nach 1 h wurde dieser Zyklus auf eine Abfolge von 10 s Bestrahlung und 40 s ohne Bestrahlung verändert. Nach Reaktionsende (Entfärbung der dunkelbraunen Lösung durch Abreaktion mit Brom) wurde das Rohprodukt mittels GC analysiert. Es wurde eine Mischung aus Monobrom-, Dibrommethylbenzophenon und nicht reagierten 4-Methylbenzophenon gefunden. Die Reaktionsmischung wurde mit 10 g Natriumthiosulfit in 100 g Wasser und 3 mal mit jeweils 200 g Wasser gewaschen. Anschließend wurde das Produkt über Natriumsulfat getrocknet und zweimal in Toluol/Hexan 1:3 umkristallisiert. Nach Trocknung im Vakuum wurden 590 g von 4-Brommethylbenzophenon (56 % Ausbeute) isoliert.
Das ¹H-NMR ergab bei 300 MHz (CDCl₃) [ppm]: 7,18 - 7,77 (m, 9 H), 4.49 (s, 2H). Die Signale waren konsistent mit dem gewünschten Produkt.

### Beispiel 3

### Darstellung von 4-Mercaptomethylbenzophenon (I)

4,14 g (54,4 mmol) Thioharnstoff wurden in 31,5 ml Ethanol (95 %) gelöst, 15,0 g (54,4 mmol) 4-Brommethylbenzophenon unter leichtem Wärmen und Rühren hinzugegeben und die Mischung über Nacht bei Raumtemperatur gerührt. Das feste Produkt wurde durch Filtration isoliert und mehrmals mit Ethanol gewaschen. Nach Trocknung im Vakuumofen wurden 15,6 g isoliert (82 % Ausbeute): Es wurde nicht weiter aufgereinigt. 12,5 g (35,5 mmol) dieses Hydrobromidsalzes wurden in 250 ml Wasser unter Erwärmen gelöst und anschließend 5,7 g Natriumhydroxid (0,143 mol) gelöst in 10 ml Wasser hinzugegeben. Nach refluxieren für 45 Minuten wurde die Lösung auf Raumtemperatur abgekühlt, mit konzentrierter Schwefelsäure ein pH-Wert kleiner 2 eingestellt und das Produkt 5 mal mit 60 ml Chloroform extrahiert. Die vereinigten Extrakte wurden mit 100 ml Wasser gewaschen und über Natriumsulfat getrocknet. Nach dem Entfernen des Lösemittels wurden 7,9 g (97 %) isoliert.
Der Schmelzpunkt betrug 54 °C. Das ¹H-NMR ergab bei 300 MHz (CDCl₃) [ppm]: 7,14 - 7,78 (m, 9 H), 3,70 (d, 2H) und 1,77 (t, 1 H). Die Signale waren konsistent mit dem gewünschten Produkt.

### Beispiel 4

### Darstellung von N-(2-Mercaptoethyl-)-4-benzoylbenzamid (II)

24,39 g (0.215 mol) 2-Aminoethanthiolhydrochlorid wurden in einen 1 L Dreihalskolben in 200 ml Chloroform gelöst unter Argon gegeben. Eine Lösung aus 50 g (0,204 mol) 4-Benzoylbenzoylchlorid und 250 ml Chloroform wurde anschließend über einen Zeitraum von 45 Minuten hinzugetropft. Die Mischung wurde über Nacht bei Raumtemperatur gerührt. Dann wurde mit Wasser und einer 0,1 N HCl-Lösung gewaschen und über Natriumsulfat getrocknet. Nach dem Trocknen wurde zweimal aus Toluol umkristallisiert und 50 g eines weißen Pulvers (86 % Ausbeute) gewonnen.
Der Schmelzpunkt betrug 112 °C. Das ¹H-NMR ergab bei 300 MHz (CDCl₃) [ppm]: 7,18 - 7,82 (m, 9 H), 6,70 - 7,02 (m, 1 H), 3,52 (q, 2H), 2,54 - 2,97 (m, 2H) und 1,37 (t, 1 H). Die Signale waren konsistent mit dem gewünschten Produkt.

### Beispiel 5

### Darstellung von N-(2-Mercaptoethyl)-3,5-bis(4-benzoylbenzoyloxy)benzamid (III)

46,2 g (0,30 mol) 3,5-Dihydroxybenzoesäure wurden in einen 250 ml Kolben mit Soxlett-Extraktor und Rückflußkühler eingefüllt. Es wurden 48,6 ml Methanol und 0,8 ml Schwefelsäure hinzugegeben und 50 g Molekularsieb (3Å) in den Soxlett-Extraktor gefüllt. Der Extraktor wurde mit Methanol befüllt und die gesamte Mischung über Nacht refluxiert. Anschließend wurde das methylierte Rohprodukt nach Entfernen des Lösemittels isoliert.
Das gesamte Produkt wurde in einen 2 L Reaktor mit Rückflußkühler und Rührer gefüllt, anschließend wurden 173,25 g (0,63 mol) 4-Brommethylbenzophenon, 207 g (1,50 mol) Kaliumcarbonat und 1200 ml Aceton hinzugegeben. Die Reaktion wurde über Nacht refluxiert und mit Dünnschichtchromatographie verfolgt. Nach vollständigem Umsatz wurde der Feststoff abfiltriert und Aceton unter verringertem Druck entfernt. Der Feststoff wurde in 1 L Wasser gelöst und dann dreimal mit je 1 L Chloroform extrahiert Die Extrakte wurden kombiniert mit der in Aceton löslichen Fraktion, über Natriumsulfat getrocknet und 177 g vom Rohprodukt isoliert. Das Rohprodukt wurde zweimal in Acetonitril rekristallisiert und letztendlich 145 g isoliert (87 %).
Der Schmelzpunkt betrug 130 °C. Das ¹H-NMR ergab bei 300 MHz (CDCl₃) [ppm]: 7,22 - 7,78 (m, 18 H), 7,15 (d, 2H), 6,69 (t, 1H), 5,02 (s, 4H) und 3,84 (s, 3H). Die Signale waren konsistent mit dem gewünschten Produkt Methyl-3,5-bis(4-benzoylbenzoyloxy)-benzoat.

60,1 g (0,108 mol) Methyl-3,5-bis(4-benzoylbenzoyloxy)-benzoat wurden in einem 2 L Reaktor gefüllt, 120 ml Wasser, 480 ml, Methanol und 6,48 g (0,162 mol) Natriumhydroxid hinzugegeben. Die Reaktionsmischung wurden für 3 h refluxiert. Nach der Hydrolyse des Esters wurde abgekühlt und Methanol unter reduziertem Druck entfernt. Das verbleibende Natriumsalz wurde in 2400 ml warmen Wasser gelöst und die freie Säure anschließend mit Salzsäure gefällt. Nach Filtration, Waschen mit Wasser und Trocknen im Vakuumofen wurden 54 g eines weißen Pulvers (92 %) isoliert.
Der Schmelzpunkt betrug 188 °C. Das ¹H-NMR ergab bei 300 MHz (CDCl₃) [ppm]: 7,28 - 7,78 (m, 18 H), 7,15 (d, 2H), 6,86 (t, 1H) und 5,16 (s, 4H). Die Signale waren konsistent mit dem gewünschten Produkt 3,5-bis(4-benzoylbenzoyloxy)benzoesäure.

20 g (36,86 mmol) 3,5-bis(4-benzoylbenzoyloxy)benzoesäure wurde mit 36 ml Toluol, 5,4 ml (74,0 mmol) Thionylchlorid und 28 *µ*l N,N-Dimethylformamid in einen 250 ml Kolben gefüllt. Die Mischung wurde für 4 h refluxiert. Nach der Bildung des Säurechlorids wurde auf Raumtemperatur abgekühlt, das Lösemittel und überschüssiges Thionylchlorid unter reduziertem Druck entfernt und durch weitere 4-malige Evaporation mit je 20 ml Chloroform weiter gereinigt. Nach Rekristallisation in Toluol wurden 18,5 g des Produktes isoliert (89% Ausbeute).
Der Schmelzpunkt betrug 125 °C. Das ¹H-NMR ergab bei 300 MHz (CDCl₃) [ppm]: 7,29 - 7,78 (m, 18 H), 7,20 (d, 2H), 6,79 (t, 1H), 5,08 (s, 4H). Die Signale waren konsistent mit dem gewünschten Produkt 3,5-bis(4-benzoylbenzoyloxy)benzoylchlorid.

4,19 g (36,7 mmol) 2-Aminoethanthiolhydrochlorid wurde in einen 250 ml Kolben mit Rückflußkühler und Rührer eingefüllt und dann 15 ml Chloroform und 10,64 ml (76,5 mmol) Triethylamin hinzugegeben. Die Reaktionsmischung wurde mittels eines Eisbades auf 0 °C abgekühlt und dann 18,4 g (32,8 mmol) 3,5-bis(4-benzoylbenzoyloxy)benzoylchlorid gelöst in 50 ml Chloroform tropfenweise über den Zeitraum von 50 Minuten hinzugegeben. Nach weiteren 30 Minuten Eiskühlung wurde für 2 h auf Raumtemperatur aufgewärmt. Das Produkt wurde mit 150 ml Chloroform verdünnt, 5 mal mit jeweils 250 ml 0,1 N Salzsäure gewaschen, über Natriumsulfat getrocknet und letztendlich zweimal in 15:1 Toluol/Hexan umkristallisiert. Vom Produkt wurden 12,9 g (65 % Ausbeute) isoliert.
Der Schmelzpunkt betrug 114 °C. Das ¹H-NMR ergab bei 300 MHz (DMSO-d6) [ppm]: 7,20 - 7,80 (m, 18 H), 7,00 (d, 2H), 6,66 (t, 1 H), 6,52 (breit t, 1H), 5,08 (s, 4H), 3,50 (q, 2H), 2,74 (q, 2H) und 1,40 (t, 1 H). Die Signale waren konsistent mit dem gewünschten Produkt N-(2-Mercaptoethyl)-3,5-bis(4-benzoylbenzoyloxy)benzamid (III).

### Beispiel 6

### Herstellung von N-(2-Mercaptoethyl)-2,6-bis(4-benzoylbenzamido)hexanamide (IV)

3,65 g (20 mmol) Lysinmonohydrochlorid wurden in 8 ml 2 N wäßriger Natriumhydroxid-Lösung gelöst und mit einem Eisbad abgekühlt. Ein Lösung aus 10,77 g (44 mmol) 4-Benzoylbenzoylchlorid, gelöst in 17 ml Chloroform, wurde gleichzeitig mit 4,48 g Natriumhydroxid in 19 ml Wasser hinzugegeben. Die Reaktion wurde für 2 h unter Eiskühlung und dann für 3 h bei Raumtemperatur gerührt. Es wurde Salzsäure verwendet, um einen pH-Wert kleiner 1 einzustellen, daraufhin wurden 60 ml Chloroform hinzugefügt. Mit einer Zentrifuge wurden die verschiedenen Phasen getrennt und die wäßrige Phase dreimal mit je 50 ml Chloroform extrahiert. Die vereinigten organischen Phasen wurden über Natriumsulfat getrocknet. Die Mutterlauge wurde mit Wasser verdünnt, das gefällte Produkt abfiltriert, wiederum in Chloroform gelöst und dann mit 10 %iger wäßriger Natriumbicarbonatlösung, 1 N Salzsäure und Wasser gewaschen. Das Produkt wurde ohne weitere Reinigung eingesetzt.

4,35 g (7,73 mmol) des Lysin-Derivates und 0,901 g (7,83 mmol) N-Hydroxysuccinimid wurden in 40 ml 1,4-Dioxan gelöst und anschließend mit 1,951 g (9,45 mmol) 1,3-Dicyclohexylcarbodiimid (DCC) in 10 ml 1,4-Dioxan versetzt. Der Ester wurde abfiltriert und getrocknet (4,1 g, 81 % Ausbeute). In einem separaten Kolben werden 0,75 g (6,6 mmol) 2-Aminoethanthiol-Hydrochlorid in 15 ml Chloroform gelöst. 4,1 g (6,22 mmol) des Esters, gelöst in 25 ml Chloroform, werden langsam zu dieser Lösung bei Raumtemperatur und über einen Zeitraum von 30 Minuten hinzugetropft. Nach 4 h wurde die Reaktionsmischung mit Wasser und 0,05 N Salzsäure gewaschen, über Natriumsulfat getrocknet und dann säulenchromatographisch mit einem Lösemittelgemisch aus 95 % Chloroform und 5 % Methanol gereinigt. Es wurden 2,2 g (Ausbeute 56 %) des Produktes isoliert.
Das ¹H-NMR ergab bei 300 MHz (CDCl₃) [ppm]: 6,90 - 7,95 (m, 21 H), 4,42 - 4,87 (m, 1H), 3,00 - 3,78 (m, 4H), 1,42 (t, 1H) und 1,00 - 2,95 (m, 8H). Die Signale waren konsistent mit dem gewünschten Produkt N-(2-Mercaptoethyl)-2,6-bis(4-benzoylbenzamido)hexanamide (IV).

### Polymerisationen

### 180° Klebkrafttest (Testmethode A)

Ein 20 mm breiter Streifen einer auf einer Polyesterfolie laminierten Acrylathaftklebemasse wurde auf zweimal mit Aceton und einmal mit Isopropanol gewaschenen Stahlplatten aufgebracht. Der Haftklebestreifen wurde zweimal mit einem 2 kg Gewicht auf das Substrat aufgedrückt. Das Klebeband wurde anschließend sofort mit einer Geschwindigkeit von 300 mm/min und im 180°-Winkel vom Substrat abgezogen. Alle Messungen wurden bei Raumtemperatur unter klimatisierten Bedingungen durchgeführt.
Die Messergebnisse sind in N/cm angegeben und sind gemittelt aus drei Messungen.

### Scherfestigkeit (Testmethode B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit einem 2 kg Gewicht das Klebeband viermal auf den Stahlträger gedrückt. Bei Raumtemperatur und bei 70 °C wurde je ein 1 kg Gewicht an dem Klebeband befestigt.
Die gemessenen Scherstandzeiten sind in Minuten angegeben und entsprechen dem Mittelwert aus drei Messungen.

### Beispiel 7

In einem konventionellen 2 L Glasreaktor, ausgestattet mit einem mechanischen Rührer, Rückflußkühler, Temperaturinnenfühler und einem Heizbad, wurden 320 g 2-Ethyl-hexylacrylat, 56 g Butylacrylat, 20 g Acrylsäure, 200 g Aceton und 4 g 4-Mercapto-methylbenzophenon hinzugegeben. Nach 30 Minuten inertisieren mit Stickstoffgas wurde unter Rühren auf 58 °C Innentemperatur aufgeheizt und dann 0,2 g AIBN (Azoisobutyronitril) hinzugeben. Nach 1,5 h Reaktionszeit wurden 0,2 g AIBN, nach 3 h 100 g Aceton hinzugegeben. Nach 8 und 10 h Reaktionszeit wurden jeweils 0,2 g Perkadox® 16 (Bis(4-tert.-Butylcyclohexanyl)-peroxy-dicarbonat) zugegeben, nach 10 h außerdem mit weiteren 100 g Aceton verdünnt. Die Polymerisation wurde nach 24 h durch Abkühlen abgebrochen. Erhalten wurde ein Polymerisat mit einem Molekulargewicht von 740.000 g/mol (M_{w} aus Gelpermeationschromatographie). Die so hergestellte Haftklebemasse wurde auf 35 % (fest) mit Aceton herunter verdünnt und dann mit 50 g/m² Klebeauftrag (fest nach dem Trocknen) auf eine 23 *µ*m Dicke geprimerte PET-Folie (Polyethylenterephthalat) aufgetragen. Das Haftklebeband wurde für 10 Minuten bei 120 °C im Trockenschrank getrocknet. Anschließend wurde das Haftklebestoffmuster in einer UV-Anlage (Fa. Eltosch) mit einer UV-Lampe (120 W/cm, 254 nm) mit 2 Durchgängen bei 20 m/min bestrahlt.

Die UV-vernetzten Haftklebebänder wurden auf Klebkraft auf Stahl (Testmethode A) und auf die Kohäsion durch einen Schertest bei Raumtemperatur und bei 70 °C getestet (Testmethode B).
Die Ergebnisse werden in Tabelle 2 zusammengestellt.

**Tabelle 2**

| | KK-Stahl [N/cm] | SSZ, RT, 10 N [min] | SSZ, 70 °C, 10 N [min] |
|---|---|---|---|
| Beispiel 7 | 6,1 | 7840 | 1355 |
| KK: Klebkraft | | | |
| SSZ: Scherstandzeiten | | | |

### Beispiel 8 (Vergleichsbeispiel)

In einem konventionellen 2 L Glasreaktor, ausgestattet mit einem mechanischen Rührer, Rückflußkühler, Temperaturinnenfühler und einem Heizbad, wurden 320 g 2-Ethyl-hexylacrylat, 56 g Butylacrylat, 20 g Acrylsäure, 200 g Aceton und 4 g Ebecryl® P 36 (acryliertes Benzophenonderivat der Fa. UCB) hinzugegeben. Nach 30 Minuten inertisieren mit Stickstoffgas wurde unter Rühren auf 58 °C Innentemperatur aufgeheizt, dann wurden 0,2 g AIBN (Azoisobutyronitril) hinzugegeben. Nach 1,5 h Reaktionszeit wurden 0,2 g AIBN, nach 3 h 100 g Aceton hinzugegeben. Nach 8 h Reaktionszeit wurden 0,2 g Perkadox® 16 (Bis(4-tert.-Butylcyclohexanyl)-peroxy-dicarbonat) hinzugegeben.
Nach 9 h mußte die Polymerisation abgebrochen werden, da der Ansatz vollständig vergelt war.

### Beispiel 9 (Vergleichsbeispiel)

In einem konventionellen 2 L Glasreaktor, ausgestattet mit einem mechanischen Rührer, Rückflußkühler, Temperaturinnenfühler und einem Heizbad, wurden 320 g 2-Ethyl-hexylacrylat, 56 g Butylacrylat, 20 g Acrylsäure, 200 g Aceton/Isopropanol (97:3) und 4 g Ebecryl® P 36 (acryliertes Benzophenonderivat der Fa. UCB) hinzugegeben. Nach 30 Minuten inertisieren mit Stickstoffgas wurde unter Rühren auf 58 °C Innentemperatur aufgeheizt, dann wurden 0,2 g AIBN (Azoisobutyronitril) hinzugegeben. Nach 1,5 h Reaktionszeit wurden 0,2 g AIBN, nach 3 h 100 g Aceton/Isopropanol (97:3) hinzugegeben. Nach 8 und 10 h Reaktionszeit wurden jeweils 0,2 g Perkadox® 16 (Bis(4-tert.-Butylcyclohexanyl)-peroxy-dicarbonat) hinzugegeben, nach 10 h außerdem nochmals mit 100 g Aceton/Isopropanol (97:3) verdünnt. Die Polymerisation wurde dann nach 24 h durch Abkühlen abgebrochen. Erhalten wurde ein Polymerisat mit einem Molekulargewicht von 760.000 g/mol (M_{w} aus Gelpermeationschromatographie). Die so hergestellte Haftklebemasse wurde auf 35 % (fest) mit Aceton herunterverdünnt und dann mit 50 g/m² Klebeauftrag (fest nach dem Trocknen) auf eine 23 µm Dicke geprimerte PET-Folie (Polyethylenterephthalat) aufgetragen. Das Haftklebeband wurde für 10 Minuten bei 120 °C im Trockenschrank getrocknet. Anschließend wurde das Haftklebestoffmuster in einer UV-Anlage (Fa. Eltosch) mit einer UV-Lampe (120 W/cm, 254 nm) mit 2 Durchgängen bei 20 m/min bestrahlt.
Die UV-vemetzten Haftklebebänder wurden auf Klebkraft auf Stahl (Testmethode A) und auf die Kohäsion durch einen Schertest bei Raumtemperatur und bei 70 °C getestet (Testmethode B).
Die Ergebnisse werden in Tabelle 3 zusammengestellt.

**Tabelle 3**

| | KK-Stahl [N/cm] | SSZ, RT, 10 N [min] | SSZ, 70 °C, 10 N [min] |
|---|---|---|---|
| Beispiel 9 | 5,8 | 6350 | 560 |
| KK: Klebkraft | | | |
| SSZ: Scherstandzeiten | | | |

### Beispiel 10

In einem konventionellen 2 L Glasreaktor, ausgestattet mit einem mechanischen Rührer, Rückflußkühler, Temperaturinnenfühler und einem Heizbad, wurden 360 g 2-Ethyl-hexylacrylat, 34 g Acrylsäure, 200 g Aceton und 6 g N-(2-Mercaptoethyl-)-4-benzoylbenzamid hinzugegeben. Nach 30 Minuten inertisieren mit Stickstoffgas wurde unter Rühren auf 58 °C Innentemperatur aufgeheizt, weiter wurde analog Beispiel 7 vorgegangen. Erhalten wird ein Polymerisat mit einem Molekulargewicht von 710.000 g/mol (M_{W} aus Gelpermeationschromatographie). Die so hergestellte Haftklebemasse wurde auf 35 % (fest) mit Aceton herunterverdünnt und dann mit 50 g/m² Klebeauftrag (fest nach dem Trocknen) auf eine 23 µm Dicke geprimerte PET-Folie (Polyethylenterephthalat) aufgetragen. Das Haftklebeband wurde für 10 Minuten bei 120°C im Trockenschrank getrocknet. Anschließend wurde das Haftklebestoffmuster in einer UV-Anlage (Fa. Eltosch) mit einer UV-Lampe (120 W/cm, 254 nm) mit 2 Durchgängen bei 20 m/min bestrahlt.
Die UV-vernetzten Haftklebebänder wurden auf Klebkraft auf Stahl (Testmethode A) und auf die Kohäsion durch einen Schertest bei Raumtemperatur und bei 70°C getestet (Testmethode B).
Die Ergebnisse werden in Tabelle 4 zusammengestellt.

**Tabelle 4**

| | KK-Stahl [N/cm] | SSZ, RT, 10 N [min] | SSZ, 70 °C, 10 N [min] |
|---|---|---|---|
| Beispiel 10 | 5,2 | +10000 | 7525 |
| KK: Klebkraft | | | |
| SSZ: Scherstandzeiten | | | |

### Beispiel 11 (Vergleichsbeispiel)

In einem konventionellen 2 L Glasreaktor, ausgestattet mit einem mechanischen Rührer, Rückflußkühler, Temperaturinnenfühler und einem Heizbad, wurden 360 g 2-Ethyl-hexylacrylat, 34 g Acrylsäure, 200 g Aceton und 6 g Benzoinacrylat (hergestellt nach Guse et al. entsprechend DE 27 43 979 A1) hinzugegeben. Nach 30 Minuten inertisieren mit Stickstoffgas wurde unter Rühren auf 58 °C Innentemperatur aufgeheizt, dann wurden 0,2 g AIBN (Azoisobutyronitril) hinzugeben. Nach 1,5 h Reaktionszeit wurden 0,2 g AIBN, nach 3 h 100 g Aceton hinzugegeben. Nach 8 h Reaktionszeit wurden 0,2 g Perkadox® 16 (Bis(4-tert.-Butylcyclohexanyl)-peroxy-dicarbonat) hinzugegeben.
Nach 9 h mußte die Polymerisation abgebrochen werden, da der Ansatz vollständig vergelt war.

### Beispiel 12 (Vergleichsbeispiel)

In einem konventionellen 2 L Glasreaktor, ausgestattet mit einem mechanischen Rührer, Rückflußkühler, Temperaturinnenfühler und einem Heizbad, wurden 360 g 2-Ethyl-hexylacrylat, 34 g Acrylsäure, 200 g Aceton/Isopropanol (97:3) und 6 g Benzoinacrylat (hergestellt nach Guse et al. entsprechend DE 27 43 979 A1 ) hinzugegeben. Nach 30 Minuten inertisieren mit Stickstoffgas wurde unter Rühren auf 58 °C Innentemperatur aufgeheizt, weiter wurde analog Beispiel 7 vorgegangen. Erhalten wurde ein Polymerisat mit einem Molekulargewicht von 750.000 g/mol (M_{w} aus Gelpermeationschromatographie). Die so hergestellte Haftklebemasse wurde auf 35 % (fest) mit Aceton herunterverdünnt und dann mit 50 g/m² Klebeauftrag (fest nach dem Trocknen) auf eine 23 *µ*m Dicke geprimerte PET-Folie (Polyethylenterephthalat) aufgetragen. Das Haftklebeband wurde für 10 Minuten bei 120 °C im Trockenschrank getrocknet. Anschließend wurde das Haftklebestoffmuster in einer UV-Anlage (Fa. Eltosch) mit einer UV-Lampe (120 W/cm, 254 nm) mit 2 Durchgängen bei 20 m/min bestrahlt.

Die UV-vemetzten Haftklebebänder wurden auf Klebkraft auf Stahl (Testmethode A) und auf die Kohäsion durch einen Schertest bei Raumtemperatur und bei 70 °C getestet (Testmethode B).
Die Ergebnisse werden in Tabelle 5 zusammengestellt.

**Tabelle 5**

| | KK-Stahl [N/cm] | SSZ, RT, 10 N [min] | SSZ, 70°C, 10 N [min] |
|---|---|---|---|
| Beispiel 9 | 5.3 | +10000 | 2455 |
| KK: Klebkraft | | | |
| SSZ: Scherstandzeiten | | | |

Wie aus den beschriebenen Beispielen 7 bis 12 hervorgeht, ist der Mercapto-funktionalisierte Photoinitiator für die Herstellung von Acrylathaftklebemassen nach dem erfinderischen Verfahren sehr geeignet. Der Polymerisation (Beispiel 7 + 10) muß dabei kein Regler zugeführt werden. Die in Analogie durchgeführten Polymerisationen (Beispiel 8 und 11) vergelten. Der Vergleich mit Beispiel 9 und 12 zeigt, daß acrylierte Photoinitiatoren durch den Zusatz eines Reglers einpolymerisiert werden können. Der Vergleich der Tabelle 2 und 3 bzw. 4 und 5 liefert für diese Methode aber eine bedeutend schlechtere Wärmescherfestigkeit.

### Beispiele 13 bis 18

Die Polymerisation der folgenden Monomerengemische (Tabelle 6: Zusammensetzung der eingesetzten Monomergemische; Mengenangaben in Gew.-%) wurde in einem konventionellen 2 L Glasreaktor, ausgestattet mit einem mechanischen Rührer, Rückflußkühler, Temperaturinnenfühler und einem Heizbad durchgeführt. Es wurde analog Beispiel 7 vorgegangen, wobei die Lösungsmittel- und Initiatormengen beibehalten wurden. Auch die jeweiligen Zeitpunkte der Zugaben wurden nicht verändert. Die Reaktionsdauer betrug 24 h.
Die nach dem erfindungsgemäßen Verfahren hergestellten Polymerisate wurden auf 35 % (fest) mit Aceton herunterverdünnt und dann mit 50 g/m² Klebeauftrag (fest nach dem Trocknen) auf eine 23 µm Dicke geprimerte PET-Folie (Polyethylenterephthalat) aufgetragen. Die Haftklebebänder wurden für 10 Minuten bei 120 °C im Trockenschrank getrocknet. Anschließend wurden die Haftklebestoffmuster in einer UV-Anlage (Fa. Eltosch) mit einer UV-Lampe (120 W/cm, 254 nm) mit 2 Durchgängen bei 20 m/min bestrahlt

Die UV-vemetzten Haftklebebänder wurden auf Klebkraft auf Stahl (Testmethode A) und auf die Kohäsion durch einen Schertest bei Raumtemperatur und bei 70 °C getestet (Testmethode B).
Die Ergebnisse werden in Tabelle 7 zusammengestellt.

**Tabelle 6**

| Beispiel | | | | | | Mercapto-funktionalisierter Photoinitiator | |
|---|---|---|---|---|---|---|---|
| | 2-EHA [%] | AS [%] | 2-HEA [%] | IO [%] | MA [%] | Verbind. | Konz. [%] |
| 13 | 0 | 5 | 0 | 75 | 19 | I | 1 |
| 14 | 46 | 1 | 5,5 | 46 | 0 | II | 1,5 |
| 15 | 0 | 5 | 0 | 75 | 18 | III | 2 |
| 16 | 88 | 10 | 0 | 0 | 0 | IV | 2 |
| 17 | 95 | 3 | 0 | 0 | 0 | I | 2 |
| 18 | 60 | 10 | 0 | 20 | 8 | I | 2 |
| 2-EHA: 2-Ethyl-hexylacrylat | | | | | | | |
| AS: Acrylsäure | | | | | | | |
| 2-HEA: 2-Hydroxyethylacrylat | | | | | | | |
| IO Isooctylacrylat | | | | | | | |
| MA: Methylacrylat | | | | | | | |

**Tabelle 7**

| Beispiel | KK-Stahl [N/cm] | SSZ, RT, 10 N [min] | SSZ, 70 °C, 10 N [min] |
|---|---|---|---|
| 13 | 4,8 | +10000 | 6890 |
| 14 | 5,9 | 2325 | 280 |
| 15 | 5,0 | +10000 | 7275 |
| 16 | 4,6 | +10000 | +10000 |
| 17 | 5,3 | 5640 | 1065 |
| 18 | 4,4 | +10000 | +10000 |
| KK: Klebkraft | | | |
| SSZ: Scherstandzeiten | | | |

## Patentansprüche

1. Verfahren zur Herstellung haftklebriger Polyacrylate durch radikalische Polymerisation, **dadurch gekennzeichnet, daß**
der Monomermischung oder der Reaktionsmischung mercaptofunktionalisierte Photoinitiatoren der allgemeinen Formel (I) und/oder (II)
**H―S―R (I)**
**R―S―S―R' (II)**
zugesetzt werden, wobei R und R' unabhängig voneinander gewählt sind aus den folgenden Gruppen:
a) Benzophenon-, Acetophenon-, Benzil-, Benzoin-, Hydroxyalkylphenon-, Phenylcyclohexylketon-, Anthrachinon-, Thioxanthon-, Triazin-, oder Fluorenonreste, wobei jeder dieser Reste mit einem oder mehreren Halogenatomen und/oder einer oder mehreren Alkoxygruppen und/oder einer oder mehreren Aminogruppen oder Hydroxygruppen substituiert sein kann,
b) Reste, welche einen oder mehrere der unter a) genannten substituierten oder unsubstituierten Reste beinhalten.

2. Verfahren nach Anspruch 1, **dadurch gekennzeichnet, daß**
der Anteil der Verbindungen (I) und/oder (II) 0,01 bis 5 Gew.-%, bezogen auf die eingesetzten Monomere, beträgt.

3. Verfahren nach zumindest einem der vorangehenden Ansprüche, **dadurch gekennzeichnet, daß**
für die Polymerisation eine Monomermischung enthaltend zumindest die folgende Komponente
a) Acryl- und/oder Methacrylsäure-Monomere der folgenden Struktur 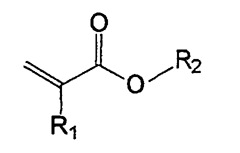 mit R₁ = H oder CH₃
und R₂ = eine Alkylkette mit 2 - 20 C-Atomen
mit einem Anteil von 65 bis 100 Gew.-%,
eingesetzt wird, sowie enthaltend optional die folgende Komponente
b) Vinylverbindungen mit funktionellen Gruppen
mit einem Anteil von 0 bis 35 Gew.-%,
wobei optional weitere Komponenten in der Monomermischung vorhanden sein können.

4. Verfahren nach zumindest einem der vorangehenden Ansprüche, **dadurch gekennzeichnet, daß**
die haftklebrigen Polyacrylate durch ultraviolette Strahlung in einem Wellenlängenbereich von 200 bis 400 nm vernetzt werden.

5. Verwendung der haftklebrigen Polyacrylate nach zumindest einem der vorangehenden Ansprüche zur Herstellung von Haftklebstoffartikeln, insbesondere zur Herstellung eines Klebebandes mit einer ein- oder beidseitig auf einen Träger aufgetragenen Acrylathaftklebemasse.

## Claims

1. Process for preparing pressure-sensitively adhesive polyacrylates by free-radical addition polymerization, **characterized in that** mercapto-functionalized photoinitiators of the general formula (I) and/or (II)
**H―S―R (I)**
**R―S―S―R' (II)**
are added to the monomer mixture or to the reaction mixture, R and R' being chosen independently of one another from the following groups:
a) benzophenone, acetophenone, benzil, benzoin, hydroxyalkylphenone, phenylcyclohexyl ketone, anthraquinone, thioxanthone, triazine, or fluorenone radicals, it being possible for each of these radicals to be substituted by one or more halogen atoms and/or one or more alkoxy groups and/or one or more amino groups or hydroxyl groups,
b) radicals which comprise one or more of the substituted or unsubstituted radicals specified under a).

2. Process according to Claim 1, **characterized in that** the fraction of the compounds (I) and/or (II) is from 0.01 to 5% by weight, based on the monomers employed.

3. Process according to at least one of the preceding claims, **characterized in that** the polymerization takes place using a monomer mixture which comprises at least the following component:
a) acrylic and methacrylic acid monomers of the following structure 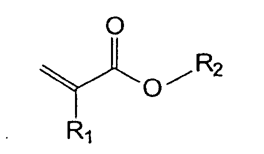 where R₁ = H or CH₃
and R₂ = an alkyl chain having 2-20 carbon atoms
with a fraction of from 65 to 100% by weight,
and which optionally comprises the following component:
b) vinyl compounds having functional groups
with a fraction of from 0 to 35% by weight,
it being possible optionally for further components to be present in the monomer mixture.

4. Process according to at least one of the preceding claims, **characterized in that** the pressure-sensitively adhesive polyacrylates are crosslinked by ultraviolet radiation in a wavelength range from 200 to 400 nm.

5. Use of the pressure-sensitively adhesive polyacrylates according to at least one of the preceding claims to produce PSA articles, particularly for producing an adhesive tape comprising an acrylic PSA applied to one or both sides of a backing.

## Revendications

1. Procédé pour la préparation de polyacrylates auto-adhésifs par polymérisation radicalaire, **caractérisé en ce qu'**on ajoute au mélange de monomères ou au mélange réactionnel des photoinitiateurs à fonctionnalité mercapto de formule générale (I) et/ou (II)
H―S―R (I)
R―S―S―R' (II)
où R et R' sont choisis, indépendamment l'un de l'autre, dans les groupes suivants:
a) les radicaux benzophénone, acétophénone, benzyle, benzoïne, hydroxyalkylphénone, phénylcyclohexylcétone, anthraquinone, thioxanthone, triazine ou fluorénone, chacun de ces radicaux pouvant être substitué par un ou plusieurs atomes d'halogène et/ou un ou plusieurs groupes alcoxy et/ou un ou plusieurs groupes amino ou groupes hydroxy,
b) les radicaux qui contiennent un ou plusieurs des radicaux substitués ou non substitués indiqués au point a).

2. Procédé selon la revendication 1, **caractérisé en ce que** la proportion de composés (I) et/ou (II) est de 0,01 à 5% en poids par rapport aux monomères utilisés.

3. Procédé selon au moins l'une quelconque des revendications, **caractérisé en ce qu'**on utilise pour la polymérisation un mélange de monomères qui contient au moins un des composants suivants :
a) monomères de l'acide acrylique et méthacrylique présentant la structure suivante : 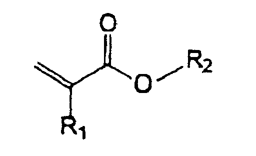 avec R₁ = H ou CH₃
et R₂ = une chaîne alkyle comprenant 2 à 20 atomes de carbone avec une proportion de 65 à 100% et qui contient éventuellement les composants suivants:
b) composés vinyle présentant des groupes fonctionnels avec une proportion de 0 à 35% en poids, d'autres composants pouvant éventuellement être présents dans le mélange de monomères.

4. Procédé selon au moins l'une quelconque des revendications précédentes, **caractérisé en ce que** les polyacrylates auto-adhésifs sont réticulés par rayonnement ultraviolet dans une plage de longueurs d'onde de 200 à 400 nm.

5. Utilisation des polyacrylates auto-adhésifs selon l'une quelconque des revendications précédentes pour la fabrication d'objets en substance auto-adhésive, en particulier pour la fabrication d'une bande adhésive avec une masse auto-adhésive d'acrylate appliquée d'un côté ou des deux côtés sur un support.
